# EUROPEAN PATENT SPECIFICATION

(11) **EP 3 752 807 B1**
(45) Date of publication and mention of the grant of the patent: **27.09.2023**
(21) Application number: 18906124.5
(22) Date of filing: 13.02.2018
(51) Int. Cl.: G01K 7/02, G01K 1/024, G01K 1/14, H01B 17/26, H02B 13/065

(54) **BUSHINGS, SYSTEM FOR TEMPERATURE MEASUREMENT AND METHOD FOR INSTALLING MEASURING ASSEMBLY IN BUSHING IN SWITCHGEAR**
BUCHSEN, SYSTEM ZUR TEMPERATURMESSUNG UND VERFAHREN ZUR INSTALLATION EINER MESSANORDNUNG IN EINER BUCHSE IN EINER SCHALTANLAGE
TRAVERSÉES, SYSTÈME DE MESURE DE TEMPÉRATURE ET PROCÉDÉ D'INSTALLATION D'UN ENSEMBLE DE MESURE DANS UNE TRAVERSÉE DANS UN APPAREILLAGE DE COMMUTATION

(43) Date of publication of application: 23.12.2020
(73) Proprietor: ABB Schweiz AG, 5400 Baden (CH)
(72) Inventor: ZHANG, Yibo, Beijing 100085 (CN); LI, Chun, Beijing 100107 (CN); CHEN, Jiansheng, Beijing 100024 (CN); TAO, Zhiqiang, Beijing 100085 (CN); XU, Baokun, Beijing 101102 (CN); ZHUANG, Zhijian, 361000 Xiamen, Fujian (CN); MENG, Delun, Beijing 100015 (CN)
(74) Representative: Zimmermann & Partner Patentanwälte mbB
(86) International application number: PCT/CN2018/076614
(87) International publication number: WO 2019/157619

(56) References cited:
- EP-A2- 2 270 452
- CN-A- 101 383 020
- CN-A- 105 222 915
- CN-A- 105 318 976
- CN-A- 105 701 521
- CN-A- 105 823 565
- CN-A- 106 052 905
- CN-U- 201 837 467
- CN-U- 205 719 283
- CN-Y- 201 237 533
- KR-B1- 101 823 007
- US-A1- 2013 099 897
- US-A1- 2016 076 945

## Description

### FIELD

Example embodiments disclosed herein generally relate to temperature measurement and more particularly, to bushings, a system for temperature measurements and a method for installing a measuring assembly in a bushing.

### BACKGROUND

A bushing is an insulated device that allows an electrical conductor to pass safely, and the bushing is widely used in the electrical devices such as switchgear or a transformer. Generally, bushings may be made of various materials, such as porcelain and resin as well as other materials, depending on individual requirement. Nowadays, resin materials have dominated the existing insulated bushing market and have been used for various types of bushings. Bushings may have various appearances, and bushings can therefore vary considerably in both material and design style.

Bushings are critical components in the electrical devices, as their chief role is to bring current at high voltage through a grounded barrier. The design of any bushing must ensure that the electrical strength of the insulated material is able to withstand the penetrating electrical energy passing through the conductor. Since the voltage passing through the bushing is high and the temperature of the busing may be also high, it is necessary to monitor the operation status of the bushing so as to ensure safety and power quality of the bushing and the electrical device (such as switchgear) in which the bushing is used.

Traditionally, a wired thermal couple is used to measure a temperature of the conductor in the bushing, which is very inconvenient. Moreover, traditional ways cannot obtain the accurate temperature of the the conductor in the bushing, such as a bushing in switchgear, and it is very costly to measure the temperature of the bushing. Accordingly, traditional ways for measuring the temperature of the bushing are inaccurate and inefficient.

CN 201 237 533 Y discloses a temperature measuring device for cable joints of high-voltage equipment.
US 2016/076945 A1 discloses a system for monitoring temperature of electrical conductor of an electrical power cable in a high voltage power distribution system.
CN 105 318 976 A discloses a cable intermediate joint wireless temperature sensing device based on electromagnetic resonance.
EP 2 270 452 A2 discloses an electronic device for detecting temperature values on an electrical conductor in an electrical system with the help of heat problems on electrical lines.
KR 101 823 007 B1 discloses an eco-friendly distribution board having partial discharge and temperature diagnosing functions and IoT technology.

### SUMMARY

Example embodiments disclosed herein propose a solution for measuring temperature of the bushing in an electrical device such as switchgear using a passive wireless measuring apparatus.

The invention relates to a bushing. The bushing comprises one end for connecting a cable accessory of a switchgear, a conductor and an insulating layer wrapping around the conductor.

The bushing further comprises a groove arranged between the conductor and the insulating lay. The bushing also comprises a measuring assembly received in the groove and surrounding the conductor, and the measuring assembly includes at least one measuring apparatus. Each measuring apparatus comprises a temperature sensor configured to measure a temperature of the conductor and a passive wireless communication module configured to transmit the measured temperature. The groove is arranged at the end of the bushing for connecting a cable accessory of a switchgear.

As known, temperature monitoring is important for an electrical device such as switchgear. In conventional solutions, a wired and active thermal couple is used to measure a temperature of a bushing in an electrical device such as switchgear. However, the wired measuring solution is very inconvenient, and a battery is always required to power the measuring sensor.

The bushing as summarized above can solve the problems caused by the traditional inconvenient and inefficient temperature measurement for the bushing. More specifically, by arranging a passive wireless measuring apparatus in a groove between the bushing and the insulating layer in the bushing, the temperature of the bushing can be measured conveniently and efficiently, while the normal work of the bushing will not be affected. That is, the temperature of the conductor in the bushing can be measured without changing the appearance of the bushing. In this way, flexible arrangement of the measuring apparatus can be achieved in the bushing due to the passive and wireless temperature measurement solution, and the reliability and safety of the electrical device at which the bushing is located can be improved.

In some embodiments, the measuring assembly further comprises a holder including at least one notch for receiving the at least one measuring apparatus respectively. In this way, the measuring assembly may be assembled detachably, and it is convenient to place the measuring apparatus close to the conductor of the bushing. Moreover, in the case that one measuring apparatus fails, it can be replaced with a new measuring apparatus conveniently and rapidly.

In some embodiments, the measuring assembly further comprises a semi-conductive layer wrapping around the holder, wherein the semi-conductive layer is thermally conductive. In this way, electromagnetic filed shielding may be achieved.

According to the invention, the groove is arranged at one end of the bushing for connecting a cable accessory of switchgear. The cable accessory often has high temperature, and excessive temperature will destroy the work stability of cable accessory in the switchgear. Conventionally, the wired and active thermal couple is difficult to be directly connected to the cable accessory so as to measure its temperature. Embodiments of the present disclosure can measure the temperature cable accessory via the bushing and place the measuring apparatus at an end of the bushing which is close to the cable accessory. In this way, the temperature of the cable accessory connected to the bushing can be monitored, and the reliability and safety of the switchgear can be improved.

In some embodiments, the least one measuring apparatus is packaged and fixed inside the measuring assembly. As such, the measuring assembly may have an integrated structure.

Examples not forming part of the invention provide another bushing. The bushing comprises a conductor and at least one groove arranged on the conductor. The bushing further comprises at least one measuring apparatus fixed in the at least one groove, and the bushing also comprises an insulating layer wrapping on the conductor and the at least one measuring apparatus. Each measuring apparatus comprises a temperature sensor configured to measure a temperature of the conductor and a passive wireless communication module configured to transmit the measured temperature.

Conventionally, temperature measurement for the bushing is implemented after the bushing is manufactured. According to the examples not forming part of the present invention, a passive wireless measuring apparatus is pre-arranged into a bushing during the manufacturing process of the bushing. Since the measuring apparatus is passive and wireless, the temperature of the conductor in the bushing can be measured conveniently and efficiently, thereby improving reliability and safety of the electrical device at which the bushing is located.

In some of these examples, the bushing further comprises a semi-conductive layer which wraps around the conductor and the at least one measuring apparatus, and the insulating layer is formed by wrapping an insulating material on the conductor and the semi-conductive layer. In this way, electromagnetic filed shielding may be achieved.

In some of these examples, the groove is arranged near one end of the bushing for connecting a cable accessory of a switchgear. The cable accessory often has high temperature, and excessive temperature will destroy the work stability of cable accessory in the switchgear. Conventionally, the wired and active thermal couple is difficult to be directly connected to the cable accessory so as to measure its temperature. Embodiments of the present disclosure can measure the temperature cable accessory via the bushing and place the measuring apparatus at an end of the bushing which is close to the cable accessory. In this way, the temperature of the cable accessory connected to the bushing can be monitored, and the reliability and safety of the switchgear can be improved.

Examples not forming part of the invention provide a further bushing. The bushing comprises a conductor, an insulating layer wrapping around a first part of the conductor, and a measuring assembly wrapping around a second part of the conductor, wherein the measuring assembly includes at least one measuring apparatus. Each measuring apparatus comprises a temperature sensor configured to measure a temperature of the conductor and a passive wireless communication module configured to transmit the measured temperature.

Conventionally, to measure the temperature of the bushing, it does not destroy the appearance and shape of the bushing, as a result, conventional measuring solution for the bushing is not suitable for big temperature sensor. According to the third aspect of the present disclosure, a part of the insulating layer of the bushing is removed, and a passive wireless measuring assembly takes the place of the removed part of the insulating layer. In this way, a passive wireless measuring assembly can be arranged to measure the temperature of the bushing, and the temperature of the bushing can be measured conveniently and efficiently.

In some of these examples, the measuring assembly is arranged at one end of the bushing for connecting a cable accessory of a switchgear. The cable accessory often has high temperature, and excessive temperature will destroy the work stability of cable accessory in the switchgear. Conventionally, the wired and active thermal couple is difficult to be directly connected to the cable accessory so as to measure its temperature. Embodiments of the present disclosure can measure the temperature cable accessory via the bushing and place the measuring apparatus at an end of the bushing which is close to the cable accessory. In this way, the temperature of the cable accessory connected to the bushing can be monitored, and the reliability and safety of the switchgear can be improved.

In some examples the at least one measuring apparatus is packaged and fixed inside the measuring assembly. In this way, the measuring assembly can have an integrated and rugged structure.

Embodiments disclosed herein provide a system for temperature measurement. The system comprises a first bushing of the first aspect, the second aspect or the third aspect. The system further comprises a first antenna and a reader which is connected to the first antenna, and the reader is configured to provide wireless radio frequency energy to power at least one measuring apparatus in the first bushing via the first antenna.

Conventionally, to measure a temperature of the bushing, a temperature measurement system needs to arrange lots of wires and batteries to work, which is inconvenient and inefficient. To solve this problem, according to the fourth aspect of the present disclosure, by use of the bushing(s) as summarized above, the temperature of the bushing can be measured wirelessly and passively. In this way, the proposed system can provide a convenient and efficient way to measure the temperature of the bushing.

In some embodiments, the first bushing is arranged on a cable accessory cabinet of a switchgear, and the first antenna is arranged on a side wall or a top wall of the cable accessory cabinet. In this way, the antenna is arranged near the bushing, and the wireless communication between the bushing and the antenna can be ensured.

In some embodiments, the system further comprises a second bushing according to the invention. Moreover, the system also comprises and a second antenna, wherein the first antenna is arranged towards the first bushing while the second antenna is arranged toward the second bushing. Compared with the conventional solutions of only one antenna, embodiments of the present disclosure provide a plurality of antennas close to the plurality of bushings in the switchgear. In this way, each bushing can have a corresponding antenna which is dedicated to the bushing, such that each bushing can have the good wireless communication, thereby improving the timeliness and reliability of the temperature measurement.

In some embodiments, the system further comprises a third antenna arranged on a front door of a cable accessory cabinet of a switchgear.

In some embodiments, the reader is arranged in a low voltage (LV) cabinet of a switchgear. In this way, the reader can be arranged away from the high temperature area of the switchgear, and thus it can protect the reader from being damaged.

In an embodiment, example embodiments disclosed herein provide an Internet of Things (IoT) system, which comprises a bushing of the first aspect, the second aspect or the third aspect.

The invention also relates to a method for installing a measuring assembly in a bushing. The method comprises forming a groove between a conductor and an insulating layer in a bushing, wherein the insulating layer wraps around the conductor. The method further comprises assembling at least one measuring apparatus into a measuring assembly, wherein each measuring apparatus comprises a temperature sensor configured to measure a temperature of the conductor and a passive wireless communication module configured to transmit the measured temperature. The method also comprises placing the measuring assembly into the groove of the bushing. bushing, wherein the groove is arranged at an end of the bushing for connecting a cable accessory of a switchgear.

In this way, for an existing or formed bushing, by digging a groove between the conductor and the insulating layer in the bushing for receiving a passive wireless measuring apparatus, the temperature of the bushing can be measured conveniently and efficiently.

According to the embodiments of the present disclosure, the temperature of the bushing can be measured accurately and effectively, thereby improving the reliability and safety of the bushing and the electrical device such as switchgear in which the bushing is used. Accordingly, temperature measurement for the bushing can work appropriately in a cost-effective and efficient way.

### BRIEF DESCRIPTION OF THE DRAWINGS

Through the following detailed descriptions with reference to the accompanying drawings, the above and other objectives, features and advantages of the example embodiments disclosed herein will become more comprehensible. In the drawings, several example embodiments disclosed herein will be illustrated in an example and in a non-limiting manner, wherein:
Fig. 1A illustrates a side view of a bushing according to an embodiment of the present disclosure;
Fig. 1B illustrates a top view of the bushing as shown in Fig. 1A;
Fig. 2A illustrates a perspective view of a measuring assembly which may be used to the bushing as shown in Fig. 1A;
Fig. 2B illustrates a bottom view of the measuring assembly as shown in Fig. 2A;
Fig. 2C illustrates a bottom view of the measuring assembly as shown in Fig. 2A into which measuring apparatuses have been assembled;
Fig. 2D illustrates a bottom view of the measuring assembly as shown in Fig. 2A into which a semi-conductive layer has been assembled;
Fig. 3A illustrates a top view of the bushing as shown in Fig. 1A into which the measuring assembly as shown in Fig. 2A has been placed;
Fig. 3B illustrates a side view of the bushing as shown in Fig. 1A into which the measuring assembly as shown in Fig. 2A has been placed;
Fig. 4A illustrates a side view of a conductor of another bushing according to an example not forming part of the invention;
Fig. 4B illustrates a side view of the conductor as shown in Fig. 4A into which the measuring apparatuses have been assembled;
Fig. 4C illustrates a side view of the bushing in which the insulating layer has wrapped on the conductor as shown in Fig. 4A;
Fig. 5A illustrates a side view of a further bushing according to an example not forming part of the invention;
Fig. 5B illustrates a side view of the bushing as shown in Fig. 5A into which the measuring assembly has been assembled;
Fig. 6 illustrates a block diagram of a system for measuring a temperature of a bushing;
Fig. 7 illustrates an example of switchgear according to an embodiment of the present disclosure; and
Fig. 8 illustrates a method for installing a measuring assembly in the bushing as shown in Fig. 1A.

Throughout the drawings, the same or like reference numbers refer to the same or like elements.

### DETAILED DESCRIPTION

The subject matter described herein will now be discussed with reference to several example embodiments. These embodiments are discussed only for the purpose of enabling those skilled persons in the art to better understand and thus implement the subject matter described herein, rather than suggesting any limitations on the scope of the subject matter.

The term "comprises" or "includes" and its variants are to be read as open terms that mean "includes, but is not limited to." The term "or" is to be read as "and/or" unless the context clearly indicates otherwise. The term "based on" is to be read as "based at least in part on." The term "being configured to" is to mean a function, an action, a motion or a state can be achieved by an operation induced by a user or an external mechanism. The term "one embodiment" and "an embodiment" are to be read as "at least one embodiment." The term "another embodiment" is to be read as "at least one other embodiment."

Unless specified or limited otherwise, the terms "assembled," "mounted," "connected," "supported," and "coupled" and variations thereof are used broadly and encompass direct and indirect assemblies, mountings, connections, supports, and couplings. Furthermore, "connected" and "coupled" are not restricted to physical or mechanical connections or couplings. Other definitions, explicit and implicit, may be included below.

As known, temperature monitoring is important for an electrical device such as switchgear. Traditionally, a wired thermal couple is used to measure a temperature of a bushing in an electrical device such as switchgear, and the measuring probe is generally located at a conductor of the bushing. However, the wired measuring apparatus is very inconvenient, which will cause the line arrangement to be complex, and a battery is often required to power the wired measuring apparatus. In addition, traditional measuring apparatus cannot obtain the accurate temperature of the conductor in the bushing, and it is generally costly to measure the temperature of the conductor in the bushing. Accordingly, traditional ways for measuring the temperature of the conductor in the bushing are inaccurate and inefficient.

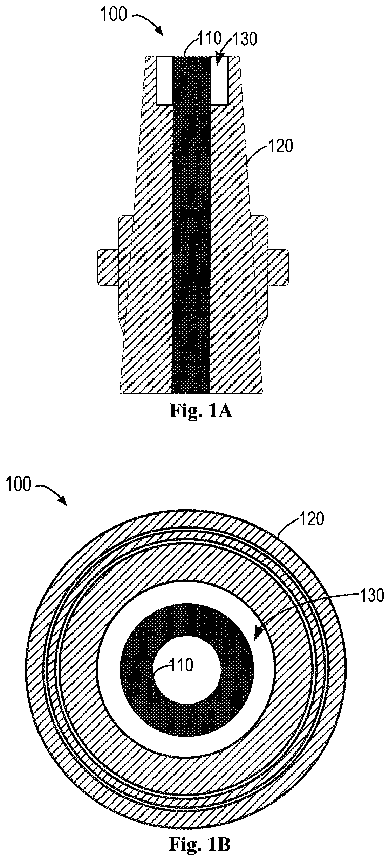

According to embodiments of the present disclosure, there are provided bushings and a system for temperature measurement, which can accurately measure the temperature of the bushing in the electrical device such as switchgear. Moreover, the proposed measuring solution is passive and wireless, and as a result, the measuring assembly can be arranged flexibly in the bushing, and the reliability and safety of the electrical device can be also improved. Therefore, according to embodiments of the present disclosure, temperature measurement for bushing can work in a cost-effective and efficient way. Some examples and embodiments of the present disclosure are described below with respect to Figs. 1-7.

It is to be understood that although in some embodiments of the present disclosure the bushings are used for switchgear such as secondary switchgear, the bushings of the present disclosure also may be used for other electrical devices, such as transformers, electrical motors and so on. In other words, bushings according to embodiments of the present disclosure are not limited to the switchgear.

Fig. 1A illustrates a side view of a bushing 100 according to an embodiment of the present disclosure. As shown in Fig. 1A, the bushing 100 comprises a conductor 110 and an insulating layer 120 (such as a shell) wrapping around the conductor 110. For example, the conductor 110 may be a conventional solid or pipe-formed conductor, which may be made of a metal material, such as copper, aluminum and so on. By means of the conductor 110, the bushing may conduct current from one end (which may be connected to a busbar of switchgear) to another end (which may be connected to a cable accessory). The insulating layer 120 abuts the conductor 110 and is made of insulating material such as an epoxy resin. It is to be understood that the insulating layer 120 may be of any suitable shape, depending on the standard with which the bushing 100 should comply, or individual requirement from the user.

Still with reference to Fig. 1A, the bushing 100 further comprises a groove 130, which is arranged between the conductor 110 and the insulating layer 120. In those embodiments where the conductor 110 is cylindrical shape, the groove 130 may be an annular groove accordingly. Of course, any other shapes are also possible. For example, in some embodiments, the groove 130 may be a short channel rather than a ring groove.

In some embodiments, the groove 130 may be formed by digging the insulating layer 120, and the size of groove 130 can be determined and controlled according to the individual requirement so as to be suitable for the measuring assembly to be received. Alternatively, the groove 130 may be formed during the manufacturing of the insulating layer 120. That is, the groove 130 may be preset in the insulating layer 120. According to embodiments of the present disclosure, the groove 130 may be used to receive a wireless measuring assembly for measuring a temperature of the bushing, which will be described in detail below.

Fig. 1B illustrates a top view of the bushing 100 as shown in Fig. 1A. As shown, the groove 130, which is an annular groove in this example, is located between the conductor 110 and the insulating layer 120. In order to accurately measure the temperature of the conductor 110, the groove 130 is arranged adjacent to the conductor 110 directly, as shown in Fig. 1B. According to the invention, the groove 130 is arranged at one end of the bushing 100 to which a cable accessory of switchgear is connected so as to measure the temperature of the cable accessory.

The cable accessory often has high temperature, and excessive temperature will destroy the work stability of cable accessory in the switchgear. Conventionally, the wired and active thermal couple is difficult to be directly connected to the cable accessory so as to measure its temperature. Embodiments of the present disclosure can measure the temperature cable accessory via the bushing and place the measuring apparatus at an end of the bushing which is close to the cable accessory. In this way, the temperature of the cable accessory connected to the bushing can be monitored, and the reliability and safety of the switchgear can be improved.

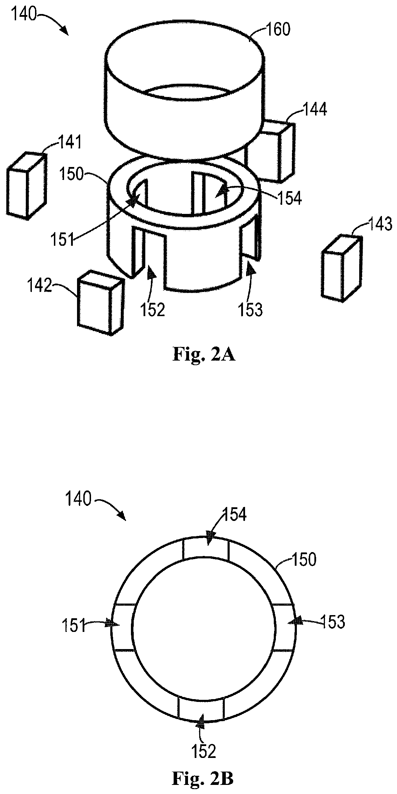

Fig. 2A illustrates a perspective view of a measuring assembly 140 which may be received in the groove 130 of the bushing 100 as shown in Fig. 1A. The measuring assembly 140 comprises one or more wireless passive measuring apparatuses, such as measuring apparatuses 141, 142, 143, 144, for measuring the temperature of the conductor 110 of the bushing 100. It is to be understood that although the measuring assembly 140 in Fig. 2A is shown as detachable, the measuring assembly 140 may be also non-detachable. For example, it may be a prefabricated integrated measurement component. For example, the wireless passive measuring apparatus may be packaged and fixed inside the measuring assembly 140 during the manufacturing of measuring assembly 140. In this way, the measuring assembly 140 can be an integrated wireless passive measuring device.

In embodiments of the present disclosure, each of measuring apparatuses 141, 142, 143, 144 comprises a temperature sensor (not shown) configured to measure a temperature of the conductor and a passive wireless communication module (not shown) configured to transmit the measured temperature. In some embodiments, the temperature sensor may be a thermal couple or a thermistor. Each temperature sensor may be approximate to the conductor 110 so as to directly obtain the temperature of the conductor 110, for example.

In some embodiments, the passive wireless communication module may transmit the measured temperature obtained from the temperature sensor to a reader through wireless communication. Moreover, the passive wireless communication does not need any battery or power wire to work. Instead, the passive wireless communication module can obtain wireless radio frequency energy from the reader so as to power each of the measuring apparatuses 141, 142, 143, 144. This is beneficial from the energy cost perspective.

The passive wireless communication module comprises an antenna for wireless communication. In some embodiments, the passive wireless communication module may comprise a passive radio frequency identification (RFID) tag. The RFID tag uses electromagnetic fields to automatically identify and track tags attached to objects and is suitable for serving as the passive wireless communication module. A RFID tag would be beneficial since it is safe and flexible and it needs no maintenance due to no battery and no replacement and it is cost-effective. In addition, the RFID tag is small in size, and thus the measuring apparatus can be positioned at a lot of different locations in the bushing.

According to embodiments of the present disclosure, the measuring apparatuses 141, 142, 143, 144 are wireless and passive without need of any power source circuit. Instead the received wireless radio frequency energy is used to power the communication. Thus, embodiments as described herein are significantly different from the traditional solutions in terms of the power up and communication mechanisms.

Still with reference to Fig. 2A, in some embodiments, the measuring assembly 140 may comprise a holder 150 which can be a polytetrafluoroethylene (PTFE) holder, for example. The holder 150 may include one or more notches 151, 152, 153, 154 for receiving the one or more measuring apparatuses 141, 142, 143, 144, respectively. It is to be understood that although the notches 151, 152, 153, 154 are facing down as shown in Fig. 2A, the notches 151, 152, 153, 154 may also be facing up in other embodiments. Alternatively, the notches may be holes in the body of the holder 150. In this way, the measuring assembly 140 maybe assembled detachably, and in the case that one measuring apparatus fails, it can be replaced with a new measuring apparatus conveniently and rapidly.

It is to be understood that although four measuring apparatuses 141, 142, 143, 144 are shown in the measuring assembly 140 in Fig. 2A, the measuring assembly 140 may have more or less measuring apparatuses, even only one measuring apparatus. In the case that several measuring apparatuses are used to obtain the good communication effect, an average temperature of the temperatures from several measuring apparatuses may be regarded as the temperature of the conductor in the bushing.

In some embodiments, the depth of the groove 130 may be less than or equal to 16 mm, for example. Accordingly, the depth of the each of the measuring apparatuses 141, 142, 143, 144 may be 13 mm or 16 mm, and the thickness of the holder 150 may be for example less than or equal to 6 mm. It is to be understood that these numeral values are merely example without suggesting any limitation as to the scope of the present disclosure. Any other sizes of the groove and the holder may be also possible, which may depend on the size of each measuring apparatus.

In some embodiments, as shown in Fig 2A, the measuring assembly 140 may further comprise a semi-conductive layer 160 which is used to wrap around the holed 150. In some embodiments, the semi-conductive layer 160 may be thermally conductive. For example, the semi-conductive layer 160 may be coated on the holder 150. In this way, electromagnetic filed shielding may be achieved.

Fig. 2B illustrates a bottom view of the measuring assembly 140 as shown Fig. 2A. As shown in Fig. 2B, there are for example four notches 151, 152, 153, 154 in the holder 150, and the measuring apparatuses 141, 142, 143, 144 have not been assembled in the holder 150.

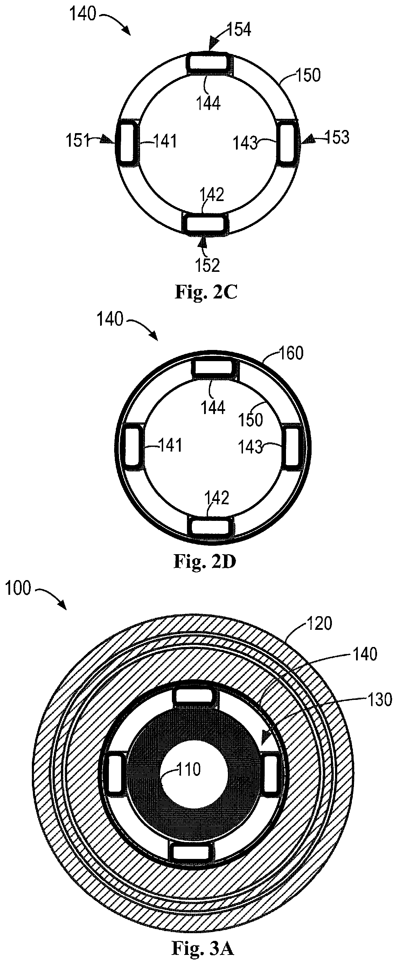

Fig. 2C illustrates a bottom view of the measuring assembly as shown in Fig. 2A into which the measuring apparatuses 141, 142, 143, 144 have been assembled. As shown in Fig. 2C, the measuring apparatuses 141, 142, 143, 144 are assembled into the notches 151, 152, 153, 154 respectively. In some embodiments, some adhesive tapes and/or glues may be used for the connections between measuring apparatuses 141, 142, 143, 144 and notches 151, 152, 153, 154.

Fig. 2D illustrates a bottom view of the measuring assembly as shown in Fig. 2A into which a semi-conductive layer 160 has been assembled. As compared with Fig. 2C, the semi-conductive layer 160 is assembled around the holder 150 in Fig. 2D so as to achieve electromagnetic filed shielding.

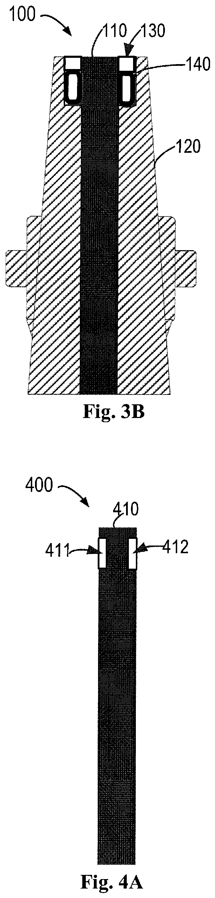

Fig. 3A illustrates a top view of the bushing 100 as shown in Fig. 1A into which the measuring assembly 140 as shown in Fig. 2A has been placed, and Fig. 3B illustrates a side view of the bushing 100 as shown in Fig. 1A into which the measuring assembly 140 as shown in Fig. 2A has been placed. Compared with Fig. 1A and Fig. 1B, the measuring assembly 140 has been assembled and received in the groove 130, and the measuring assembly 140 surrounds the conductor 110.

In some embodiments, silicon grease may be filled in the gap between the measuring assembly 140 and the conductor 110, and the gap between the measuring assembly 140 and the insulating layer 120. In this way, the lubricant effect may be implemented, and bubble and partial discharge may be prevented.

According to embodiments of the present disclosure, by arranging a passive wireless measuring apparatus in a groove between the bushing and the insulating layer in the bushing, the temperature of the bushing can be measured conveniently and efficiently, while the normal work of the bushing will not be affected. In this way, flexible arrangement of the measuring apparatus can be achieved in the bushing due to the passive and wireless temperature measurement solution, and the reliability and safety of the electrical device at which the bushing is located can be improved.

Fig. 4A illustrates a side view of a conductor 410 of another bushing 400 not forming part of the invention. As shown in Fig. 4A, one or more grooves (such as grooves 411, 412) are arranged (such as dug) on the conductor 410 for receiving one or more measuring apparatuses. It is to be understood that the grooves 411, 412 may be shallow slots on the conductor 410 so as to not affect the normal work of the conductor 410.

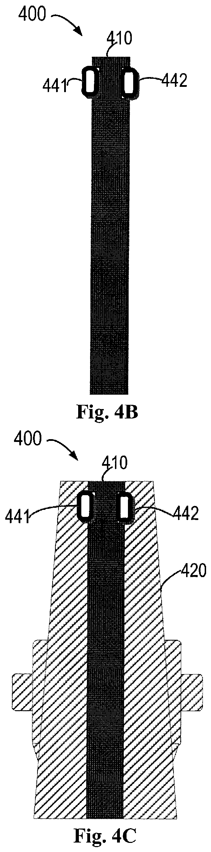

Fig. 4B illustrates a side view of the conductor 410 as shown in Fig. 4A into which the measuring apparatuses 441, 442 have been assembled. As shown in Fig. 4B. The measuring apparatuses 441, 442 may be fixed in the grooves 411, 412 through adhesive tapes, glues, or bandages. Each of the measuring apparatuses 441, 442 comprises a temperature sensor configured to measure a temperature of the conductor and a passive wireless communication module configured to transmit the measured temperature, as discussed with reference to the measuring apparatuses 141, 142, 143, 144 in Fig. 2A. In other words, each measuring apparatus 441, 442 may has the same construct and function(s) as those of each measuring apparatus 141, 142, 143, 144.

Fig. 4C illustrates a side view of the bushing 400 in which the insulating layer 420 has wrapped on the conductor 410 as shown in Fig. 4A. As shown in Fig. 4C, the insulating layer 420 is wrapped on the conductor 410 and the measuring apparatuses 441, 442. It is to be understood that during the manufacturing process of the bushing 400, the measuring apparatuses 441, 442 are arranged into the grooves 411 and 412. Only when the insulating layer 420 has been coated on the conductor 410 and the measuring apparatuses 441, 442, the bushing 400 is fully formed and produced.

In some examples, the depth of each groove 411, 412 may be for example less than or equal to 1 mm, and the distance between each groove and the corresponding end of the conductor 410 may be 8 mm, for example. However, it is to be understood that other sizes of the groove may be also possible, depending on the size of each measuring apparatus and the actual need. Moreover, in various embodiments, the measuring apparatus 411, 412 may be placed in the groove 411, 412 vertically or horizontally.

In some examples, the bushing 400 may further comprise a semi-conductive layer (such as hot shrinkable layer) to achieve electromagnetic filed shielding. The semi-conductive layer wraps around the conductor 410 and the measuring apparatuses 441, 442, and the insulating layer 420 is formed by wrapping an insulating material on the conductor 410 and the semi-conductive layer. In some embodiments, the grooves 411, 412 are arranged near one end of the bushing 400 to which a cable accessory of switchgear is connected, so as to measure the temperature of the cable accessory.

Conventionally, temperature measurement for the bushing is implemented after the bushing is manufactured. According to the bushing of the present disclosure, a passive wireless measuring apparatus is pre-arranged into a bushing during the manufacturing process of the bushing. Since the measuring apparatus is passive and wireless, the temperature of the conductor in the bushing can be measured conveniently and efficiently, thereby improving reliability and safety of the electrical device at which the bushing is located.

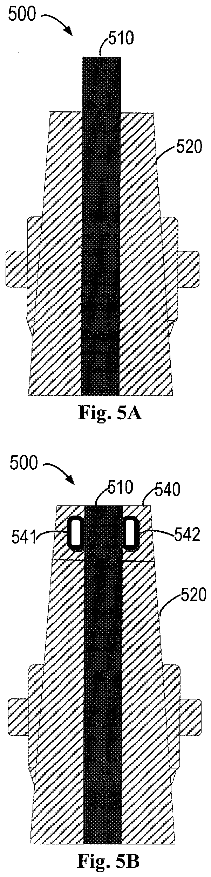

Fig. 5A illustrates a side view of a further bushing 500 according to a further example not forming part of the invention. As shown in Fig. 5A, the bushing 500 comprises a conductor 510 and an insulating layer 520 wrapping around a first part of the conductor 510. For example, the insulating layer 520 wraps around the lower part of the conductor 510. As shown, the upper part of the conductor 510 is removed by cutting off the upper part of the insulating layer 520.

Fig. 5B illustrates a side view of the bushing 500 as shown in Fig. 5A into which a measuring assembly 540 has been assembled. It can be seen that on the top of the bushing 500, there is the measuring assembly 540 wrapping around a second part of the conductor 510. For example, the measuring assembly 540 wraps around the upper part of the conductor 510. The measuring assembly 540 comprises the measuring apparatuses 541, 542, each of which comprises a temperature sensor and a passive wireless communication module. Each temperature sensor is measure a temperature of the conductor, and the respective passive wireless communication module is configured to transmit the measured temperature, as discussed with reference to the measuring apparatuses 141, 142, 143, 144 in Fig. 2A. In other words, each measuring apparatus 441, 442 may has the same construct and function(s) as those of each measuring apparatus 141, 142, 143, 144.

In some examples, the measuring assembly 540 is arranged at one end of the bushing 500 to which a cable accessory of switchgear is connected to so as to measure the temperature of the cable accessory. In some embodiments, the measuring apparatuses 541, 542 are packaged and fixed inside the measuring assembly 540. That is, the measuring apparatus can be preassembled in the measuring assembly 540, and the measuring assembly 540 is non-detachable. In this way, the measuring assembly 540 is an integrated wireless passive measuring device amounted on the upper part of the bushing 500.

In some examples, the height of the measuring assembly 540 may be less than or equal to 15 mm, for example. It is to be understood that the bushing 500 may be user to accommodate thicker measuring apparatus than that of the bushing 100 with reference to Fig. 1A. In some examples, silicone grease may be used to the measuring assembly 540 for lubrication, and simulation and test may be made to verify dielectric fields and creepage distance.

Conventionally, to measure the temperature of the bushing, it does not destroy the appearance and shape of the bushing, as a result, conventional measuring solution for the bushing is not suitable for big temperature sensor. According to embodiments of the present disclosure, a part of the insulating layer of the bushing is removed, and a passive wireless measuring assembly takes the place of the removed part of the insulating layer. In this way, a passive wireless measuring assembly can be arranged to measure the temperature of the bushing, and the temperature of the bushing can be measured conveniently and efficiently.

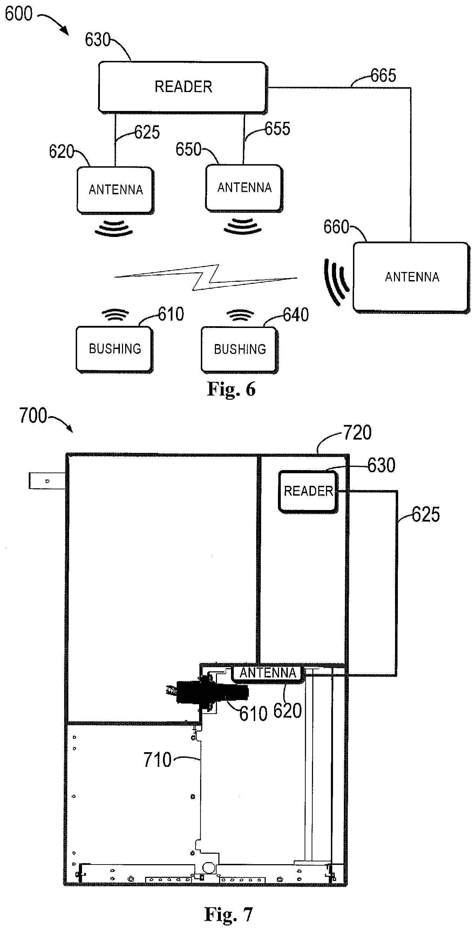

Fig. 6 illustrates a block diagram of a system 600 for measuring a temperature of a bushing. As shown, the system 600 comprises a bushing 610. The bushing 610 may be the bushing 100 as discussed above. The bushing 610 comprises a temperature sensor configured to measure a temperature of the conductor and a passive wireless communication module configured to transmit the measured temperature. The system 600 further comprises an antenna 620 and a reader 630 connected to the first antenna 620, and the reader 630 is configured to provide wireless radio frequency energy to power the measuring apparatus (such as measuring apparatuses 141, 142, 143) in the bushing 610 via the first antenna 620.

In some embodiments, the bushing 610 may be arranged on a cable accessory cabinet of a switchgear (for example the secondary switchgear 700 as discussed below), and the antenna 620 may be arranged on a side wall or a top wall of the cable accessory cabinet so that the wireless communication between the bushing 610 and the antenna 620 can be enhanced.

In some embodiments, the system 600 may further comprise a bushing 640, which also may be the bushing 100, as discussed above, and an antenna 650. In some embodiments, the antenna 620 may be arranged towards the bushing 610 while the antenna 650 may be arranged towards the bushing 640. Moreover, the system 600 may further comprise an antenna 660, which may be arranged on a front door of a cable accessory cabinet of the switchgear. The antenna 660 may be a larger antenna and can provide wireless radio frequency energy to power all the measuring apparatuses in the system 600.

According to embodiments of the present disclosure, the measuring apparatuses in bushings 610 and 640 can use the received radio frequency energy to work so as to obtain the temperatures of the bushings. The antennas 620 and 650 are connected to the reader 630 via the lines 625, 655 such as a RF cable or a co-axially cable and are configured to receive the measured temperatures from the bushing 610 and 640. Moreover, the antenna 660 may be connected to the reader 630 via the line 665. For example, the antenna 660 may be arranged on a front door of a cable accessory cabinet of the switchgear.

For example, the reader 630 may ask all measuring apparatuses in the bushings 610, 640 for electronic product codes (EPCs), the measuring apparatuses in the bushings 610, 640 return the EPCs to the reader 630 and start to work. Next, the reader 630 starts to obtain temperatures from the measuring apparatuses bushings 610, 640, and each measuring apparatus returns the temperature to the reader 630 in real time.

In some embodiments, the reader 630 may be arranged in a LV cabinet of a switchgear, and the size of the reader may be for example 30mm*80mm*10mm. For example, it is ensured that there is no metal element laid between the antennas and the bushing so as not interrupt the wireless communications. Furthermore, to have good communication quality, the antennas and the reader may be tuned so that the power, frequency, direction and so on may be optimal for operations of the measuring apparatuses in the bushings.

It is to be understood that although two bushing 610, 640 are shown in Fig. 6, the system 600 may include less or more bushings. Moreover, to improve the communication quality in the case of a large amount of measuring apparatuses, more antennas located at different locations may be provided in the system 600.

In some embodiments, the measuring apparatuses in the bushing of the present disclosure can be used to measure temperature of the bushing. Bushing according to the embodiments of the present disclosure can be used to monitor the temperature of the electrical device at which the bushing is located, and thus temperature changes at different locations can be also monitored quickly and accurately.

Conventionally, to measure a temperature of the bushing, a temperature measurement system needs to arrange lots of wires and batteries to work, which is inconvenient and inefficient. To solve this problem, according to emblements of the present disclosure, by use of the bushing according to embodiments of present disclosure, the temperature of the bushing can be measured wirelessly and passively. In this way, the proposed system can provide a convenient and efficient way to measure the temperature of the bushing.

Fig. 7 illustrates an example of switchgear 700 according to an embodiment of the present disclosure. The switchgear 700 may be secondary switchgear and may comprise a cable accessory cabinet 710 and a LV cabinet 720. The antenna 620 may be arranged in the cable accessory cabinet 710 so as to receive the temperature from the bushing 610, the reader 630 may be arranged in LV cabinet 720, and the antenna 620 may be connected to the reader 630 via the line 625.

It is to be understood although one bushing 610 is shown in Fig. 7, the switchgear 700 may include a plurality of bushings; moreover, the switchgear 700 may include a plurality of antennas for good communications. In addition, although the switchgear 700 is used as an example, the bushings according to embodiments of the present disclosure also may be used for other electrical devices, such as transformers, electrical motors and so on.

According to embodiments of the present disclosure, the temperature of the bushing 610 in the cable accessory cabinet 710 can be measured and/or monitored accurately and effectively, thereby improving the reliability and safety of the bushing 610 as well as the switchgear 700. Accordingly, temperature measurement for the bushing in the electrical device can work appropriately in a cost-effective and efficient way.

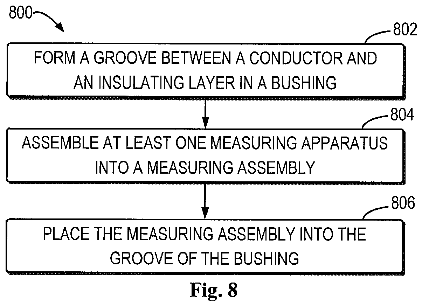

Fig. 8 illustrates a method for installing the measuring assembly 140 in the bushing 100 as shown in Fig. 1A. At 802, the groove 130 between the conductor 110 and the insulating layer 120 in the bushing 100 is formed, and the groove 130 may be made after the bushing 100 is manufactured, or during the manufacturing process of the bushing 100. At 804, at least one measuring apparatus (such as one or more of measuring apparatuses 141, 142, 143, 144) is assembled into the measuring assembly 140. At 806, the measuring assembly 140 is placed into the groove 130 in the bushing 100. In this way, for an existing or formed bushing, by digging a groove between the conductor and the insulating layer in the bushing for receiving a passive wireless measuring apparatus, the temperature of the bushing can be measured conveniently and efficiently

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A bushing (100) comprising:
one end for connecting a cable accessory of a switchgear (700);
a conductor (110);
an insulating layer (120) wrapping around the conductor (110);
a groove (130) arranged between the conductor (110) and the insulating layer (120); and
a measuring assembly (140) received in the groove (130) and surrounding the conductor (110), the measuring assembly (140) including at least one measuring apparatus (141, 142,143, 144),
wherein each measuring apparatus (141, 142, 143, 144) comprises:
a temperature sensor configured to measure a temperature of the conductor (110); and
a passive wireless communication module configured to transmit the measured temperature, **characterised in that**
the groove (130) is arranged at the end of the bushing (100) for connecting a cable accessory of a switchgear (700).

2. The bushing (100) according to claim 1, wherein the measuring assembly (140) further comprises a holder (150) including at least one notch (151, 152, 153, 154) for receiving the at least one measuring apparatus (141, 142, 143, 144) respectively.

3. The bushing (100) according to claim 2, wherein the measuring assembly (140) further comprises a semi-conductive layer (160) wrapping around the holder (150), wherein the semi-conductive layer (160) is thermally conductive.

4. The bushing (100) according to claim 1, wherein the least one measuring apparatus (141, 142, 143, 144) is packaged and fixed inside the measuring assembly (140).

5. A system (600) comprising:
a first bushing (610, 100, 400, 500) according to any of claims 1-4;
a first antenna (620); and
a reader (630) connected to the first antenna (620), wherein the reader (630) is configured to provide wireless radio frequency energy to power at least one measuring apparatus (141, 142, 143, 144, 441, 442, 541, 542) in the first bushing (610, 100, 400, 500) via the first antenna (620).

6. The system (600) according to claim 5, wherein the first bushing (610, 100, 400, 500) is configured to be arranged on a cable accessory cabinet (710) of a switchgear (700), and wherein the first antenna (620) is configured to be arranged on a side wall or a top wall of the cable accessory cabinet (710).

7. The system (600) according to claim 5, further comprising:
a second bushing (640, 100, 400, 500) according to any of claims 1-11; and
a second antenna (650), and
wherein the first antenna (620) is arranged towards the first bushing (610, 100, 400, 500), and the second antenna (650) is arranged towards the second bushing (640, 100, 400, 500).

8. The system (600) according to claim 7, further comprising:
a third antenna (660) configured to be arranged on a front door of a cable accessory cabinet (710) of a switchgear (700).

9. The system (600) according to any of claims 5-8, wherein the reader (630) is configured to be arranged in a low voltage (LV) cabinet (720) of a switchgear (700).

10. An Internet of Things (IoT) system comprising:
a bushing (100, 400, 500) according to any of claims 1-4.

11. A method for installing a measuring assembly (140) in a bushing (100), comprising:
forming a groove (130) between a conductor (110) and an insulating layer (120) in a bushing (100), the insulating layer (120) wrapping around the conductor (110);
assembling at least one measuring apparatus (141, 142, 143, 144) into a measuring assembly (140); and
placing the measuring assembly (140) into the groove (130) of the bushing (100),
wherein each measuring apparatus (141, 142, 143, 144) comprises:
a temperature sensor configured to measure a temperature of the conductor (110); and
a passive wireless communication module configured to transmit the measured
temperature, **characterised in that** the groove (130) is arranged at an end of the bushing (100) for connecting a cable accessory of a switchgear (700).

## Patentansprüche

1. Buchse (100), umfassend:
ein Ende zum Anschließen eines Kabelzubehörs einer Schaltanlage (700);
einen Leiter (110);
eine Isolierschicht (120), die den Leiter (110) umhüllt;
eine Nut (130), die zwischen dem Leiter (110) und der Isolierschicht (120) angeordnet ist,
eine Messanordnung (140), die in der Nut (130) aufgenommen ist und den Leiter (110) umgibt, wobei die Messanordnung (140) mindestens eine Messvorrichtung (141, 142, 143, 144) umfasst,
wobei jede Messvorrichtung (141, 142, 143, 144) umfasst:
einen Temperatursensor, der zum Messen einer Temperatur des Leiters (110) konfiguriert ist; und
ein passives drahtloses Kommunikationsmodul, das so konfiguriert ist, dass es die gemessene Temperatur überträgt, **dadurch gekennzeichnet, dass** die Nut (130) an dem Ende der Buchse (100) zum Anschließen eines Kabelzubehörs einer Schaltanlage (700) angeordnet ist.

2. Buchse (100) nach Anspruch 1, wobei die Messanordnung (140) ferner einen Halter (150) mit mindestens einer Aussparung (151, 152, 153, 154) zur Aufnahme der mindestens einen Messvorrichtung (141, 142, 143, 144) aufweist.

3. Buchse (100) nach Anspruch 2, wobei die Messanordnung (140) ferner eine halbleitende Schicht (160) umfasst, die den Halter (150) umhüllt, wobei die halbleitende Schicht (160) wärmeleitend ist.

4. Buchse (100) nach Anspruch 1, wobei die mindestens eine Messvorrichtung (141, 142, 143, 144) in der Messanordnung (140) verpackt und befestigt ist.

5. System (600), umfassend:
eine erste Buchse (610, 100, 400, 500) nach einem der Ansprüche 1-4;
eine erste Antenne (620); und
ein Lesegerät (630), das mit der ersten Antenne (620) verbunden ist, wobei das Lesegerät (630) so konfiguriert ist, dass es drahtlose Hochfrequenzenergie bereitstellt, um mindestens eine Messvorrichtung (141, 142, 143, 144, 441, 442, 541, 542) in der ersten Buchse (610, 100, 400, 500) über die erste Antenne (620) zu versorgen.

6. System (600) nach Anspruch 5, wobei die erste Buchse (610, 100, 400, 500) dazu ausgebildet ist, an einem Kabelzubehörschrank (710) einer Schaltanlage (700) angeordnet zu werden, und wobei die erste Antenne (620) dazu ausgebildet ist, an einer Seitenwand oder einer Deckwand des Kabelzubehörschranks (710) angeordnet zu werden.

7. System (600) nach Anspruch 5, ferner umfassend:
eine zweite Buchse (640, 100, 400, 500) nach einem der Ansprüche 1-4; und
eine zweite Antenne (650), und
wobei die erste Antenne (620) in Richtung der ersten Buchse (610, 100, 400, 500) angeordnet ist und die zweite Antenne (650) in Richtung der zweiten Buchse (640, 100, 400, 500) angeordnet ist.

8. System (600) nach Anspruch 7, ferner umfassend:
eine dritte Antenne (660), die so konfiguriert ist, dass sie an einer Fronttür eines Kabelzubehörschranks (710) einer Schaltanlage (700) angeordnet werden kann.

9. System (600) nach einem der Ansprüche 5-8, wobei das Lesegerät (630) so konfiguriert ist, dass es in einem Niederspannungsschrank, 720, (720) einer Schaltanlage (700) angeordnet werden kann.

10. System für das Internet der Dinge (IoT), umfassend:
eine Buchse (100, 400, 500) nach einem der Ansprüche 1-4.

11. Verfahren zum Installieren einer Messanordnung (140) in einer Buchse (100), umfassend:
Ausbilden einer Nut (130) zwischen einem Leiter (110) und einer Isolierschicht (120) in einer Buchse (100), wobei die Isolierschicht (120) den Leiter (110) umhüllt;
Zusammenbau mindestens einer Messvorrichtung (141, 142, 143, 144) zu einer Messanordnung (140); und
Einsetzen der Messanordnung (140) in die Nut (130) der Buchse (100),
wobei jede Messvorrichtung (141, 142, 143, 144) umfasst:
einen Temperatursensor, der zum Messen einer Temperatur des Leiters (110) konfiguriert ist; und
ein passives drahtloses Kommunikationsmodul, das so konfiguriert ist, dass es die gemessene Temperatur überträgt, **dadurch gekennzeichnet, dass** die Nut (130) an einem Ende der Buchse (100) zum Anschließen eines Kabelzubehörs einer Schaltanlage (700) angeordnet ist.

## Revendications

1. Traversée (100) comprenant :
une extrémité destinée à raccorder un accessoire de câble d'un appareillage de commutation (700) ;
un conducteur (110) ;
une couche isolante (120) enveloppant le conducteur (110) ;
une rainure (130) disposée entre le conducteur (110) et la couche isolante (120) ; et
un ensemble de mesure (140) reçu dans la rainure (130) et entourant le conducteur (110), l'ensemble de mesure (140) comportant au moins un appareil de mesure (141, 142, 143, 144),
dans laquelle chaque appareil de mesure (141, 142, 143, 144) comprend :
un capteur de température configuré pour mesurer une température du conducteur (110) ; et
un module de communication sans fil passif configuré pour transmettre la température mesurée, **caractérisée en ce que**
la rainure (130) est disposée à l'extrémité de la traversée (100) destinée à raccorder un accessoire de câble d'un appareillage de commutation (700).

2. Traversée (100) selon la revendication 1, dans laquelle l'ensemble de mesure (140) comprend en outre un support (150) comportant au moins une encoche (151, 152, 153, 154) destinée à recevoir l'au moins un appareil de mesure (141, 142, 143, 144), respectivement.

3. Traversée (100) selon la revendication 2, dans laquelle l'ensemble de mesure (140) comprend en outre une couche semi-conductrice (160) enveloppant le support (150), la couche semi-conductrice (160) étant thermiquement conductrice.

4. Traversée (100) selon la revendication 1, dans laquelle l'au moins un appareil de mesure (141, 142, 143, 144) est enveloppé et fixé à l'intérieur de l'ensemble de mesure (140).

5. Système (600) comprenant :
une première traversée (610, 100, 400, 500) selon l'une quelconque des revendications 1 à 4 ;
une première antenne (620) ; et
un lecteur (630) relié à la première antenne (620), le lecteur (630) étant configuré pour fournir de l'énergie radiofréquence sans fil pour alimenter au moins un appareil de mesure (141, 142, 143, 144, 441, 442, 541, 542) dans la première traversée (610, 100, 400, 500) par le biais de la première antenne (620).

6. Système (600) selon la revendication 5, dans lequel la première traversée (610, 100, 400, 500) est configurée pour être disposée sur une armoire d'accessoires de câble (710) d'un appareillage de commutation (700), et dans lequel la première antenne (620) est configurée pour être disposée sur une paroi latérale ou une paroi supérieure de l'armoire d'accessoires de câble (710).

7. Système (600) selon la revendication 5, comprenant en outre :
une deuxième traversée (640, 100, 400, 500) selon l'une quelconque des revendications 1 à 4 ; et
une deuxième antenne (650), et
dans lequel la première antenne (620) est disposée vers la première traversée (610, 100, 400, 500), et la deuxième antenne (650) est disposée vers la deuxième traversée (640, 100, 400, 500).

8. Système (600) selon la revendication 7, comprenant en outre :
une troisième antenne (660) configurée pour être disposée sur une porte avant d'une armoire d'accessoires de câble (710) d'un appareillage de commutation (700).

9. Système (600) selon l'une quelconque des revendications 5 à 8, dans lequel le lecteur (630) est configuré pour être disposé dans une armoire basse tension (ET) (720) d'un appareillage de commutation (700).

10. Système d'Internet des objets (1oT) comprenant :
une traversée (100, 400, 500) selon l'une quelconque des revendications 1 à 4.

11. Procédé destiné à installer un ensemble de mesure (140) dans une traversée (100), comprenant :
la formation d'une rainure (130) entre un conducteur (110) et une couche isolante (120) dans une traversée (100), la couche isolante (120) enveloppant le conducteur (110) ;
l'assemblage d'au moins un appareil de mesure (141, 142, 143, 144) à l'intérieur d'un ensemble de mesure (140) ; et
la mise en place de l'ensemble de mesure (140) à l'intérieur de la rainure (130) de la traversée (100),
dans lequel chaque appareil de mesure (141, 142, 143, 144) comprend :
un capteur de température configuré pour mesurer une température du conducteur (110) ; et
un module de communication sans fil passif configuré pour transmettre la température mesurée, **caractérisé en ce que** la rainure (130) est disposée à une extrémité de la traversée (100) destinée à raccorder un accessoire de câble d'un appareillage de commutation (700).
